# EUROPEAN PATENT APPLICATION

(11) **EP 2 770 411 A2**
(43) Date of publication of application: **27.08.2014**
(21) Application number: 14156417.9
(22) Date of filing: 24.02.2014
(51) Int. Cl.: G06F 3/041

(54) **Method for detecting touch and electronic device thereof**

(30) Priority: 25.02.2013 KR 20130020170
(71) Applicant: Samsung Electronics Co., Ltd., Suwon-si Gyeonggi-do 443-742 (KR)
(72) Inventor: Park, Jae-Hyung, Gyeonggi-do (KR); Park, Jong-Dae, Seoul (KR); Lee, Heon-Seok, Gyeonggi-do (KR); Kim, Moon-Soo, Seoul (KR)
(74) Representative: Jenkins, Richard Gavin

(57) **Abstract**

A method and device for detecting a touch input in an electronic device are provided. The method includes determining a scanning segment and detecting a proximity touch event during the scanning segment, according to a horizontal synchronization (H-sync) signal of a display.

## Description

### TECHNICAL FIELD

The present disclosure relates to a method for detecting a touch and an electronic device thereof.

### BACKGROUND

Nowadays, with the development of electronic communication industry, user devices such as a mobile communication terminal (cellular phone), an electronic scheduler, and a Personal Digital Assistant (PDA) are now very widely used and have become important means for transferring quickly changing information. User devices can provide various data transmitting services and various additional services as well as intrinsic audio dedicated communication and have thus evolved to multimedia communication devices. Further, as many user devices now actively use a touch screen, a preference tendency for the touch screen is clear and User Interface (UI) technology for controlling the user device and various services using the UI technology develops apace.

In general, a touch screen includes a Touch Screen Panel (TSP) and a TSP Integrated Circuit (IC) for controlling the TSP. The TSP IC acquires data through scanning at a predetermined gap from touch detection sensors and determines whether a touch occurs and a touch position through the acquired data.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and device for detecting a touch that can prevent an erroneous operation by scanning hovering data of a proximity touch event at a segment in which a noise level is low.

Another aspect of the present disclosure is to provide a method and device for detecting a touch, by scanning an input of a proximity touch event during a segment other than a segment in which noise occurs in a Touch Screen Panel (TSP) due to interference of a display.

Another aspect of the present disclosure is to provide a method and device for detecting a touch, where the device electrically connects a pin that outputs a horizontal synchronization (H-sync) signal of a display driving Integrated Circuit (IC) and an Input and Output (I/O) port of a TSP IC.

Another aspect of the present disclosure is to provide a method and device for detecting a touch, the device including a TSP IC that receives an H-sync signal from a display driving IC through synchronization with a display driving IC and that determines a segment in which a noise level is low in an H-sync cycle and that scans data of a proximity touch event during the segment.

Another aspect of the present disclosure is to provide a TSP IC that scans data of a proximity touch event during a segment other than a gate switching segment or a source switching segment for an H-sync signal cycle in a display.

In accordance with an aspect of the present disclosure, a method of detecting a proximity touch input in an electronic device is provided. The method includes determining a scanning segment and detecting a proximity touch event during the scanning segment.

In accordance with an aspect of the present disclosure, an electronic device is provided. The device includes a display driving IC configured to provide an H-sync signal of a display, and a TSP IC configured to determine a scanning segment and to detect a proximity touch event during the scanning segment according to the H-sync signal.

In accordance with an aspect of the present disclosure, a non-transitory computer readable recording medium is provided. The recording medium is encoded with a program for executing operation of determining a scanning segment, and operation of detecting a proximity touch input event during the scanning segment, according to an H-sync signal of a display.

In accordance with an aspect of the present disclosure, a method of suppressing an erroneous operation in a proximity touch input scanning operation is provided. The method includes determining a segment in which a noise level is low, and scanning data of a proximity touch input event during the segment.

In accordance with an aspect of the present disclosure, a device is provided. The device a touch screen display and at least one controller configured to suppress an erroneous operation in a proximity touch input scanning operation by determining a segment in which a noise level is low and by controlling the device to scan data of a proximity touch input event during the segment.

In accordance with an aspect of the present disclosure, a method of suppressing an erroneous operation in a proximity touch input scanning operation is provided. The method includes determining a segment in which noise occurs due to interference of a display, and scanning data of a proximity touch input event during a segment other than the segment in which noise occurs.

In accordance with an aspect of the present disclosure, a device is provided. The device includes a touch screen display, and at least one controller configured to suppress an erroneous operation in a proximity touch input scanning operation by determining a segment in which noise occurs due to interference of the display and by controlling the device to scan data of a proximity touch input event during a segment other than the segment in which noise occurs.

In accordance with an aspect of the present disclosure, a device is provided. The device includes a display, a display IC configured to drive the display, a TSP, and a TSP IC configured to control the TSP. The TSP IC is configured to receive a H-sync signal from the display IC, to determine a segment in which noise is low according to the H-sync signal, and to scan data of a proximity touch input event during the segment.

In accordance with an aspect of the present disclosure, a device is provided. The device includes a display, a display IC configured to drive the display, a TSP, and a TSP IC configured to control the TSP. The TSP IC is configured to receive an H-sync signal from the display IC, to determine a segment in which noise occurs according to the H-sync signal, and to scan data of a proximity touch input event during a segment other than the segment in which noise occurs.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram illustrating a configuration of a user device according to an embodiment of the present disclosure;
FIG. 2 is a block diagram illustrating a configuration of an electronic device that defines a touch detection segment according to an embodiment of the present disclosure;
FIG. 3 is a flowchart illustrating an input detection operation of an electronic device according to an embodiment of the present disclosure;
FIG. 4 is a diagram illustrating a proximity touch input detection segment defined in an electronic device according to an embodiment of the present disclosure; and
FIG. 5 is a diagram illustrating a segment that scans a proximity touch event and a direct touch for a vertical-horizontal synchronization cycle according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

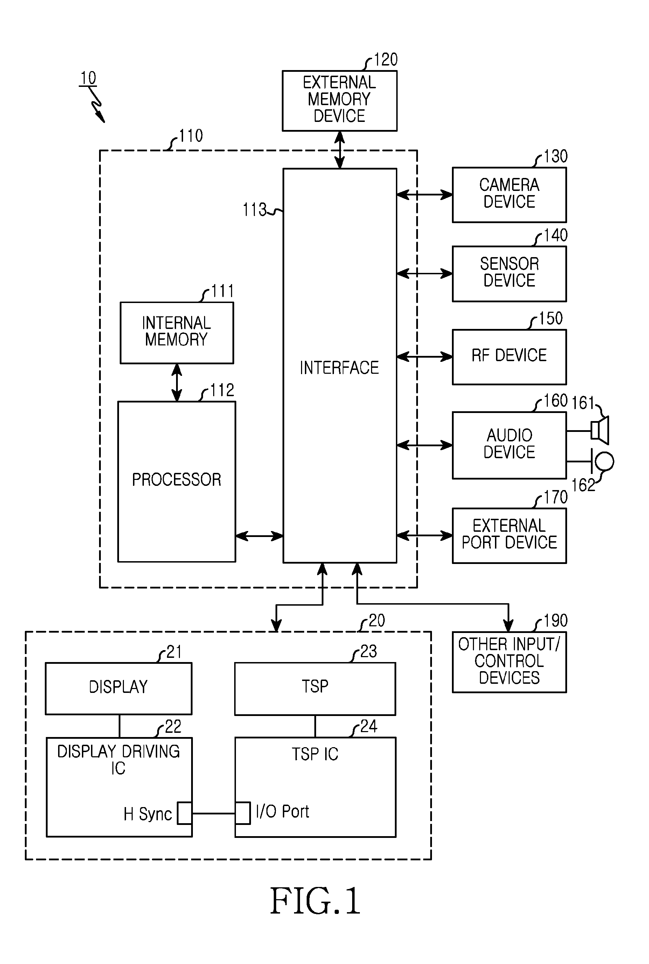

FIG. 1 is a block diagram illustrating a configuration of a user device 10 according to an embodiment of the present disclosure.

Such a user device 10 may be a device such as a mobile phone, a media player, a tablet computer, a handheld computer, or a Personal Digital Assistant (PDA). Further, the user device 10 may be a random mobile terminal including a device in which two or more functions of such devices are coupled.

The user device 10 may include a host device 110, an external memory device 120, a camera device 130, a sensor device 140, a Radio Frequency (RF) device 150, an audio device 160, an external port device 170, a touch screen device 20, and other input/control devices 190. The external memory device 120 and the external port device 170 may be formed in plural.

The host device 110 may include an internal memory 111 and at least one processor 112, and interface 113. The internal memory 111 and at least one processor 112 and interface 113 may be one or more separate constituent elements or may be configured in at least one integrated circuit.

The processor 112 performs several functions for the user device 10 by executing various software programs and may perform a processing and a control for audio dedicated communication, audiovisual communication, and data communication. Further, in addition to such a common function, by executing a software module (instruction set) stored at the internal memory 111 and/or the external memory device 120, the processor 112 can perform several functions corresponding to the module. Further, in addition to common functions, by executing a specific software module (instruction set) stored at the internal memory 111 and/or the external memory device 120, the processor 112 can perform specific various functions corresponding to the module. That is, the processor 112 can perform a method of an embodiment of the present disclosure by interlocking with software modules stored at the internal memory 111 and/or the external memory device 120. Further, the processor 112 may include (not shown) at least one data processor, image processor, or coder-decoder (codec). Further, the user device 10 may separately include a data processor, an image processor, or a codec.

The interface 113 connects the host device 110 to several devices of the user device 10.

The camera device 130 may perform a camera function such as picture and video clip recording. The camera device 130 may include a Charged Coupled Device (CCD), and may include a Complementary Metal-Oxide Semiconductor (CMOS). Further, the camera device 130 may adjust a change of a hardware configuration, for example, lens movement and an F number of an iris, according to a camera module in which the processor 112 executes.

Various constituent elements of the user device 10 may be connected through at least one communication bus (not shown) or a stream line (not shown).

The sensor device 140 includes a motion sensor, an optical sensor, and a temperature sensor, and may perform various functions. For example, the motion sensor may detect a motion of the user device 10, and the optical sensor may detect peripheral light.

The RF device 150 enables to perform wireless communication and may include an RF transmitter/receiver and a light (e.g., infrared rays) transmitter/receiver. The RF device 150 may be configured to operate through one of a Global System for Mobile Communication (GSM) network, an Enhanced Data GSM Environment (EDGE) network, a Code Division Multiple Access (CDMA) network, a W-Code Division Multiple Access (W-CDMA) network, a Long Term Evolution (LTE) network, an Orthogonal Frequency Division Multiple Access (OFDMA) network, a Wi-Fi network, a WiMax network or/and a BLUETOOTH network according to a communication network.

The audio device 160 is connected to a speaker 161 and a microphone 162 to perform an audio input and output for functions such as voice recognition, voice duplication, digital recording, and communication functions. That is, the audio device 160 enables communication between users through the speaker 161 and the microphone 162. Further, the audio device 160 receives a data signal from the host device 110, converts the received data signal to an electric signal, and outputs the converted electric signal through the speaker 161. The speaker 161 may convert and output the electric signal to an audible frequency band, and the microphone 162 may convert a sound wave transferred from a person or other sound sources to an electric signal. Further, the audio device 160 may receive the electric signal from the microphone 162, convert the received electric signal to an audio data signal, and transmit the converted audio data signal to the host device 110. The audio device 160 may include an earphone, a headphone, or a head set that may be attached to the user device 10 and that may be detached from the user device 10.

The external port device 170 may directly connect the user device 10 to another user device or may indirectly connect the user device 10 to another user device through a network (e.g., Internet, intranet, and wireless Local Area Network (LAN)).

The touch screen device 20 may provide an input and output interface between the user device 10 and a user. The touch screen device 20 applies touch detection technology, transfers a touch input of the user to the host device 110, and shows visual information, for example, a text, graphic, and video provided from the host device 110 to the user. Further, the touch screen device 20 may further apply random multi touch detection technology including other proximity sensor arrangement or other elements as well as capacitive, resistive, infrared rays, and surface sound wave technology.

The touch screen device 20 may include a display 21, a display driving Integrated Circuit (IC) 22, a Touch Screen Panel (TSP) 23, and a TSP IC 24. In order to display a text or an image in the display 21, the display driving IC 22 may provide a driving signal and data into an electric signal. The TSP IC 24 may scan data on a touch from the TSP 23 and detect whether a contact touch and/or a proximity touch event exists, or a position thereof. In general, the TSP 23 may be disposed to overlap with the display 21 and may generate noise due to interference from the display 21. Such a TSP 23 may be shaped with an on-cell method in which Indium Tin Oxide (ITO) is deposited in a thin film on the display 21 or may be shaped with an in-cell method in which ITO is deposited in a thin film at the inside of the display 21.

When a noise level is low in such a TSP 23, the TSP IC 24 may scan data of a proximity touch event in the TSP 23. For this, an Input-Output (I/O) port of the TSP IC 24 is electrically connected to a pin that outputs a horizontal synchronization (H-sync) signal of the display driving IC 22, and the TSP IC 24 may receive an H-sync signal from the display driving IC 22, determine a segment in which a noise level is low in the H-sync, and scan data of a proximity touch event at the TSP 23 at the segment.

Other input/control devices 190 may include an up/down button for controlling a volume. In addition, the other input/control devices 190 may include at least one of a pointer device such as a push button, a locker button, a locker switch, a thumb-wheel, a dial, a stick, and a stylus in which a corresponding function is given.

The external memory device 120 may include a non-volatile memory and/or a high speed Random Access Memory (RAM) such as a magnetic disk storage device, a light storage device, and/or a flash memory (e.g., logical NAND, NOR). The external memory device 120 stores software, and the software may include an operation system module, a communication module, a graphic module, a user interface module, a codec module, a camera module, and at least one application module and proximity touch module. A term of a module may be expressed with a set of instructions, an instruction set, or a program.

The operation system module indicates an internal Operating System (OS) such as WINDOWS, LINUX, Darwin, RTXC, UNIX, OS X, or VxWorks, and may include various software elements for controlling a general system operation. A control of such a general system operation may include memory management and control, storage hardware (device) control and management, and power control and management. In addition, the OS module may perform a function of enabling to smoothly perform communication among several hardware (device) and software elements (module).

The communication module may communicate with a computer, a server, and a user device through the RF device 150 or the external port device 170.

The graphic module may include several software elements for providing and displaying graphic to the touch screen device 20. A term of graphics includes a text, a web page, an icon, a digital image, a video, and animation.

The user interface module may include several software elements related to a user interface. In addition, the user interface module may include contents on a change of a state of a user interface and contents on a condition in which a user interface state is changed.

The codec module may include a software element related to an encoding and decoding of a video file.

The camera module may include a camera related software element that enables to perform camera related process and functions.

The application module may include a browser, an email, an instant messenger, word processing, keyboard emulation, an address book, a touch list, a widget, Digital Right Management (DRM), voice recognition, voice duplication, a location determining function, and a location-based service. The memory 120 may further include an additional module (instruction) in addition to the above-described modules.

Further, various functions of the user device 10 according to an embodiment of the present disclosure may be executed with hardware and/or software including at least one stream processing and/or Application Specific Integrated Circuit (ASIC) and/or a combination thereof.

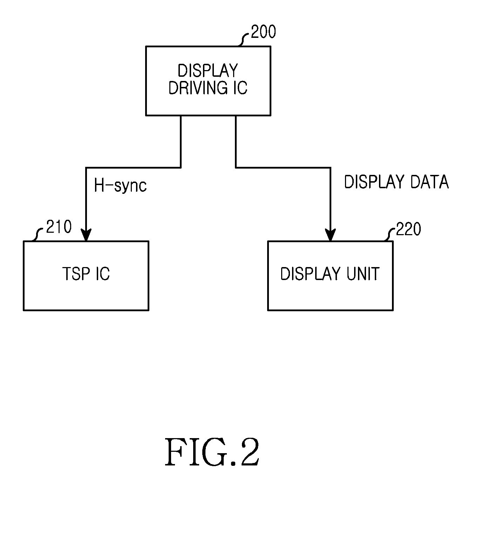

FIG. 2 is a block diagram illustrating a configuration of an electronic device that defines a touch detection segment according to an embodiment of the present disclosure.

Referring to FIG. 2, the electronic device may include a display driving IC 200 for controlling a display operation, a TSP IC 210 for controlling operation of a touch panel, and a display unit 220.

By providing a driving signal and data as an electric signal to the display unit 220, the display driving IC 200 may process image data to be displayed to the display unit 220.

In this case, the display driving IC 200 may provide display data to the display unit 220 according to a clock signal. As an example, the display driving IC 200 may provide display data to the display unit 220 using an H-sync signal and a vertical synchronization (V-sync) signal.

Further, the display driving IC 200 may provide at least an H-sync signal to the TSP IC 210.

The TSP IC 210, having received the H-sync signal may define a touch detection segment using the received H-sync signal. This is because noise occurs at a partial segment for a cycle of the H-sync signal and noise does not occur at the remaining segments.

That is, by analyzing a waveform of an H-sync signal, having received from the display driving IC 200, the TSP IC 210 may determine a segment in which noise does not occur and define the segment as a proximity touch (hovering input) event detection segment.

According to embodiments of the present disclosure, the electronic device may include a display driving IC that provides an H-sync signal of a display and a TSP IC that determines a scanning segment and that detects a proximity touch event during the scanning segment, according to the H-sync signal.

According to embodiments, the TSP IC may determine the remaining segments, except for a noise segment occurring about a rising edge or a falling edge of a synchronization pulse, as the scanning segment.

According to embodiments, the display driving IC may provide an H-sync signal of the display to the TSP IC.

According to embodiments, the display driving IC may provide the H-sync signal according to a resolution of the display.

According to embodiments, the display driving IC may provide the H-sync signal according to a display frame rate.

According to embodiments, the H-sync signal may include a synchronization pulse for corresponding output synchronization of each row corresponding to an output signal of the display.

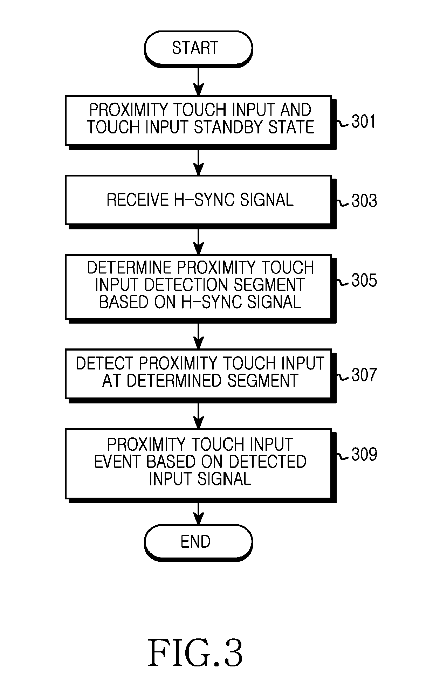

FIG. 3 is a flowchart illustrating an input detection operation of an electronic device according to embodiment of the present disclosure.

Referring to FIG. 3, the electronic device may detect a proximity touch input event and a touch input (i.e., a direct contact touch input). Here, the touch input is to directly generate an input to a TSP using an input means such as a user's finger or an electronic pen. In addition, the proximity touch input event is to generate a proximity touch input by detecting the input means even in a state that the input means does not contact a TSP.

In order to detect a proximity touch input event, the electronic device should detect an input signal by an input means in a state that the input means is yet separated from a TSP. However, a problem may occur in that the device cannot detect a normal input signal due to noise generated in a periphery.

Noise generated at the inside or the outside of a display unit may be a factor that disturbs detection of an input signal to the input means. As an example, the electronic device may stack a display unit in an upper end portion of the TSP that can detect an input signal. In such an electronic device, noise that disturbs detection of an input signal may occur by displayed data. Such noise may disturb detection of a proximity touch input event rather than detection of a touch input.

In order to solve such a problem, by receiving an H-sync signal from the display driving IC, the electronic device may define a touch detection segment in which noise does not occur. This is because noise occurs at a partial segment of a cycle of the H-sync signal and noise does not occur at the remaining segments.

Further, an output pin of an H-sync signal of the display driving IC may be electrically connected to an input and output port of the TSP IC.

The electronic device may perform a proximity touch input and may be in a touch input standby state as in operation 301.

Further, in order to define a touch detection segment in which noise does not occur, the electronic device may receive an H-sync signal as in operation 303. The H-sync signal may vary according to a display frame ratio and a display resolution. A touch detection segment defined based on the H-sync signal may be changed according to a resolution and a frame ratio of the display.

Further, the electronic device may determine a proximity touch input event detection segment according to an H-sync signal as in operation 305. In this case, as described above, the electronic device may determine a segment in which noise does not occur in a cycle of an H-sync signal.

As an example, the electronic device may define a determined noise segment of a cycle of an H-sync signal received from the display driving IC as a proximity touch input event non-detection segment.

Further, by analyzing a waveform of an H-sync signal received from the display driving IC, the electronic device may define a segment in which noise does not occur as a proximity touch input event detection segment.

Further, the electronic device may detect a proximity touch input event at a determined proximity touch input segment in which noise does not occur according to an H-sync signal as in operation 307.

Further, the electronic device may have a proximity touch input event based on a detected input signal at a proximity touch input segment in which noise does not occur as in operation 309. As an example, the electronic device may execute a selected application with a proximity touch input.

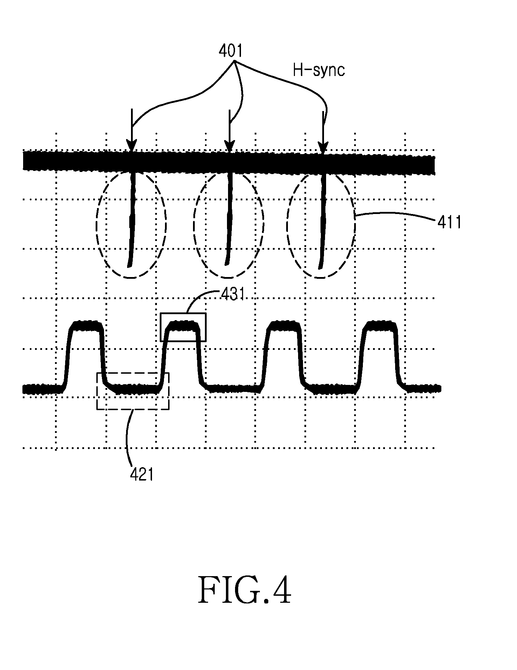

FIG. 4 is a diagram illustrating a proximity touch input event detection segment defined in an electronic device according to embodiment of the present disclosure.

FIG. 4 illustrates a magnitude 411 of noise according to generation 401 of an H-sync signal.

Referring to FIG. 4, it can be determined that a proximity touch input segment 431 exists in an H-sync signal generated in the display driving IC and a partial segment of a cycle of the H-sync signal. This is because a noise segment 421 occurs at a gate switching time point or a source switching time point for a cycle of the H-sync signal.

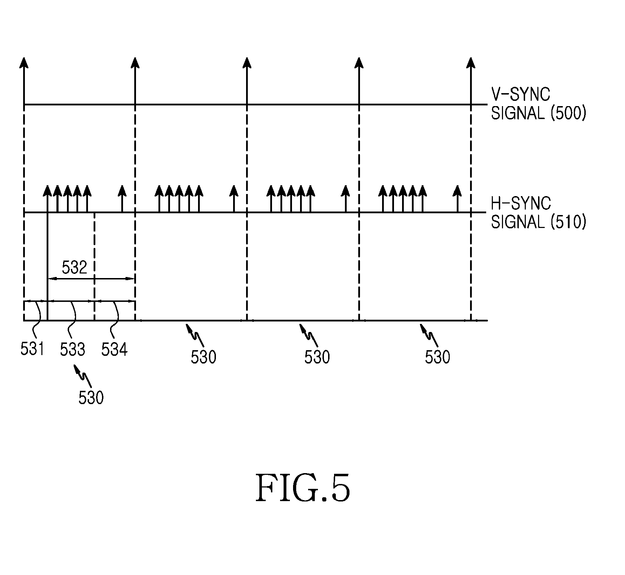

FIG. 5 is a diagram illustrating a segment that scans a proximity touch event and a direct touch for a vertical-horizontal synchronization cycle according to an embodiment of the present disclosure.

Referring to FIG. 5, a V-sync signal 500 of the display occurs with a first cycle and an H-sync signal 510 of the display occurs with a second cycle. For example, the V-sync signal 500 may occur in a pulse form at every 16.7 msec (= 1/60 Hz), and the H-sync signal 510 may occur in a pulse form at every 8.6 µsec (= 16.7 msec/1920) smaller than a first cycle, based on a resolution 1920×1080. The V-sync signal 500 occurs and after a predetermined time has elapsed, a plurality of V-syncs may occur. The first cycle depicted in FIG. 5 represents a cycle in which a frame is changed.

Here, a predetermined time 531 is a segment in which noise does not occur and may be used as a segment for scanning a proximity touch event. A segment 532 in which a plurality of H-sync signals occur for 16.7 msec 530 may be used as a segment for scanning a proximity touch or a direct touch. In an embodiment, a partial segment 533 of the time segment 532 may be used as a scanning segment for a direct touch, and another partial segment 534 of the time segment 532 may be used as a scanning segment for a proximity touch event.

When the partial segment 533 of the time segment 532 is used as a scanning segment for a direct touch, the entire partial segment 533 may be used as a scanning segment, and when another partial segment 534 of the time segment 532 is used as a scanning segment for a proximity touch event, at only the remaining segments, except for a noise segment generated about a falling edge or a rising edge of a pulse, scanning may be performed.

According to embodiments of the present disclosure, a method of detecting an input of an electronic device may include operation of determining a scanning segment and operation of detecting a proximity touch event during the scanning segment according to an H-sync signal of a display.

According to embodiments, the scanning segment may include remaining segments, except for a noise segment occurring about a rising edge or a falling edge of a synchronization pulse.

According to embodiments, an H-sync signal of the display may include a signal provided to a TSP IC controlling a touch input in the display driving IC controlling the display.

According to embodiments, the H-sync signal may be according to a resolution of the display.

According to embodiments, the H-sync signal may be according to a display frame rate.

According to embodiments, the H-sync signal may include a synchronization pulse for corresponding output synchronization of each row corresponding to an output signal of the display.

According to embodiments, at least a portion of a device (e.g., modules or functions thereof) or a method (e.g., operations) according to the present disclosure may be embodied with an instruction stored in non-transitory computer-readable storage media in, for example, a programming module form. When the instruction is executed by at least one processor (e.g., the processor 112), the at least one processor may perform a function corresponding to the instruction. The computer-readable storage media may be, for example, the memory 120. At least a portion of the programming module may be implemented (e.g., executed) by, for example, the processor 112. At least a portion of the programming module may include, for example, a module, a program, a routine, sets of instructions, or a process for performing at least one function.

The computer-readable storage media may include magnetic media such as a hard disk, a floppy disk, and a magnetic tape, optical media such as a Compact Disc Read Only Memory (CD-ROM) and a Digital Versatile Disc (DVD), magnetooptical media such as a floptical disk, and a hardware device, specially configured to store and perform a program instruction (e.g., a programming module), such as a Read Only Memory (ROM), a Random Access Memory (RAM), a flash memory. Further, a program instruction may include a high-level language code that may be executed by a computer using an interpreter as well as a machine language code generated by a compiler. In order to perform operation of the present disclosure, the above-described hardware device may be configured to operate as at least one software module, and vice versa.

A module or a programming module according to the present disclosure may include at least one of the foregoing constituent elements, may omit some constituent elements, or may further include an additional constituent element. Operations performed by a module, a programming module, or another constituent element according to the present disclosure may be executed with a sequential, parallel, repeated, or heuristic method. Further, some operations may be executed in different orders, may be omitted, or may add other operations.

According to embodiments, in storage media that store instructions, when the instructions are executed by at least one processor, the instructions are set to perform at least one operation by at least one processor, and the at least one operation may include operation of determining a scanning segment and operation of detecting a proximity touch for the scanning segment, according to an H-sync signal of the display.

A TSP IC according to the present disclosure periodically does not scan data of a proximity touch event in a TSP and scans data on a proximity touch event according to noise occurring in the TSP by interference of the display. Particularly, in order to determine noise occurring in a TSP by the display, the TSP IC receives an H-Sync signal from the display driving IC through synchronization with a display driving IC that controls the display, distinguishes a segment in which a noise level is low, and scans data of a proximity touch event during the segment. Finally, when a noise level is low, a touch detection device according to an embodiment actively scans data of a proximity touch event and thus occurrence of an erroneous operation can be effectively suppressed.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of detecting a proximity touch input in an electronic device, the method comprising:
determining a scanning segment; and
detecting a proximity touch event during the scanning segment, according to a horizontal synchronization (H-sync) signal of a display.

2. The method of claim 1, wherein the scanning segment comprises remaining segments, except for a noise segment occurring about a rising edge or a falling edge of a synchronization pulse of the H-sync signal.

3. The method of claim 1, wherein the H-sync signal of the display comprises a signal provided from a display driving Integrated Circuit (IC) controlling the display to a Touch Screen Panel (TSP) IC controlling a touch input.

4. The method of claim 1, wherein the H-sync signal is according to a resolution of the display.

5. The method of claim 1, wherein the H-sync signal is according to a display frame rate.

6. The method of claim 1, wherein the H-sync signal comprises a synchronization pulse for corresponding output synchronization of each row corresponding to an output signal of the display.

7. An electronic device, comprising:
a display driving Integrated Circuit (IC) configured to provide a horizontal synchronization (H-sync) signal of a display; and
a Touch Screen Panel (TSP) IC configured to determine a scanning segment and to detect a proximity touch event during the scanning segment, according to the H-sync signal.

8. The device of claim 7, wherein the TSP IC is configured to determine remaining segments, except for a noise segment occurring about a rising edge or a falling edge of the synchronization pulse, as the scanning segment.

9. The device of claim 7, wherein the display driving IC is configured to provide the H-sync signal of the display to the TSP IC.

10. The device of claim 7, wherein the display driving IC is configured to provide the H-sync signal according to a resolution of the display.

11. The device of claim 7, wherein the display driving IC is configured to provide the H-sync signal according to a display frame rate.

12. The device of claim 7, wherein the H-sync signal comprises a synchronization pulse for corresponding output synchronization of each row corresponding to an output signal of the display.

13. A non-transitory computer readable recording medium encoded with a program executing operation of determining a scanning segment and operation of detecting a proximity touch event during the scanning segment, according to a horizontal synchronization (H-sync) signal of a display.
